Europäisches Patentamt

European Patent Office

Office européen des brevets

(11) Publication number: **0 262 925**
**A2**

# (12) EUROPEAN PATENT APPLICATION

(21) Application number: 87308619.3

(22) Date of filing: 29.09.87

(51) Int. Cl.4: **G 11 B 5/11**
G 11 B 5/33
// G11B5/39

(30) Priority: 29.09.86 US 913164

(43) Date of publication of application:
06.04.88 Bulletin 88/14

(84) Designated Contracting States: DE FR GB

(71) Applicant: **Hewlett-Packard Company**
**3000 Hanover Street**
**Palo Alto California 94304 (US)**

(72) Inventor: **Gill, Hardayal S.**
**321 Cuesta Dr.**
**Los Altos, CA 94022 (US)**

**Simmons, Ralph F., Jr.**
**11535 Wildrose Ct.**
**Bois, ID 83704 (US)**

(74) Representative: **Williams, John Francis et al**
**J.F. Williams & Co 34 Tavistock Street**
**London WC2E 7PB (GB)**

(54) **Transducer shield.**

(57) An improved shield (1A-3) for field sensing transducers (1A-2) used in magnetic storage devices has a single magnetic domain in the vicinity of the transducer (1A-2). It may also have a planar surface for the transducer (1A-2) to rest on, low magnetic reluctance for fields from the recording media, and stability against external magnetic fields, that is, high reluctance for external magnetic fields.

FIG 1A

**Description**

SHIELDS FOR FIELD SENSITIVE TRANSDUCERS

Field of the Invention

This invention relates to read/write heads for computer magnetic media. In particular, the invention relates to shields for field sensitive transducers such as magnetoresistive transducers, Hall transducers, and magnetic field effect transistors.

Background of the Invention

Field sensitive transducers, such as magnetoresistive transducers have several properties that make them desirable read heads for magnetic recording systems. Since their output voltage signal is proportional to the input current signal, magnetoresistive transducers can produce large magnitude output signals. When shielded from unwanted magnet signals, these transducers can read high density recordings. Unlike inductive read heads, which detect changes in magnetic flux; magnetoresistive transducers detect magnetic flux. This feature makes them desirable in low velocity recording systems.

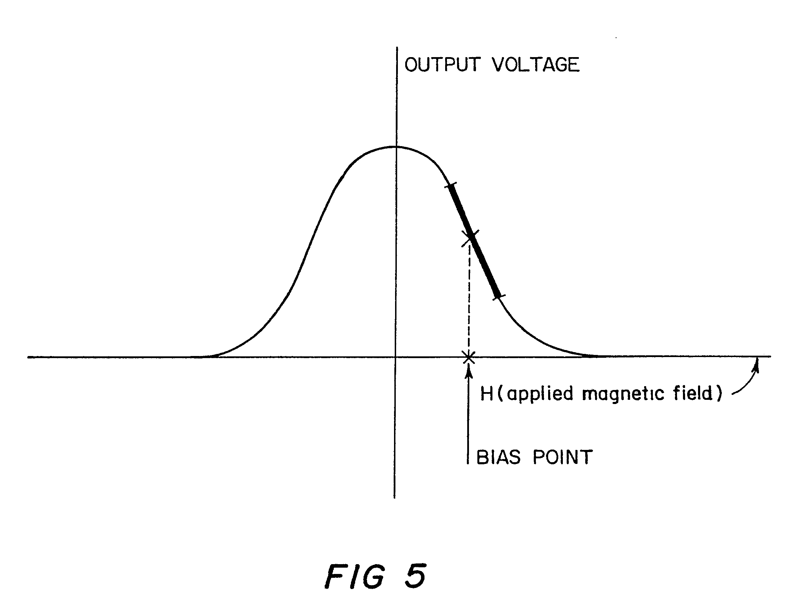

However, magnetoresistive transducers have three problems. First, small magnetoresistive transducers, desirable for high density data applications, often exhibit Barkhausen noise. Barkhausen noise originates from changes in the transducer's magnetic domain structure. Schemes to suppress magnetic domain activity in these transducers is outlined in the prior art. The article Magnetics of Small Magnetoresistive Sensors written by Ching Tsang and published in The Journal of Applied Physics of 15 March 1984 describes schemes to suppress domain activity and which is incorporated by reference herein. Secondly, magnetoresistive transducers exhibit the nonlinear characteristic shown in Figure 5. Figure 5 plots the output voltage of magnetoresistive head versus the magnetic field applied to the magnetoresistive head. The Tsang article incorporated above lists several biasing schemes that force magnetoresistive heads to operate in its linear range.

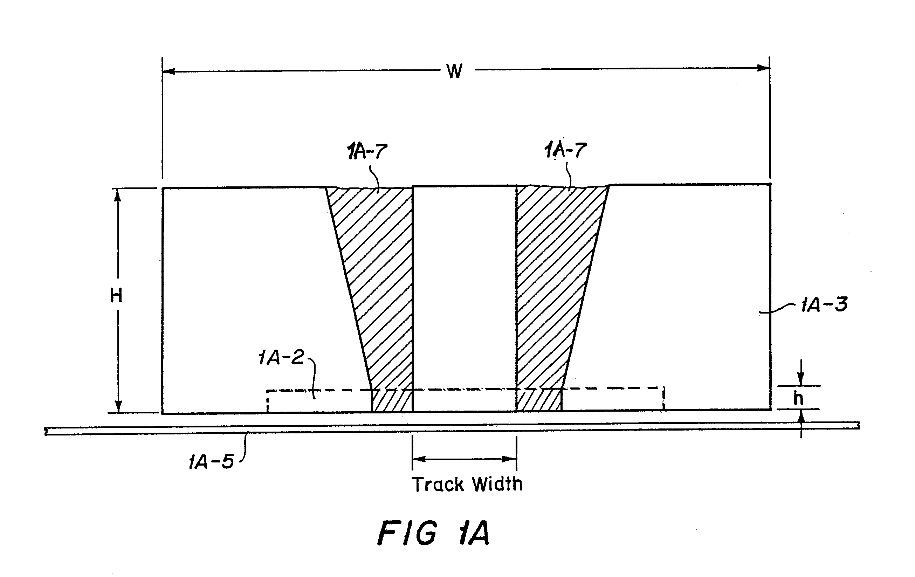

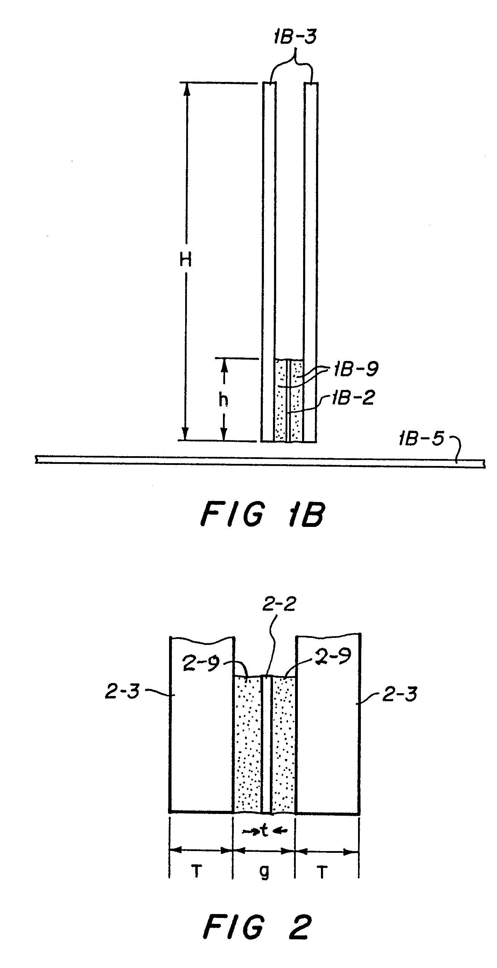

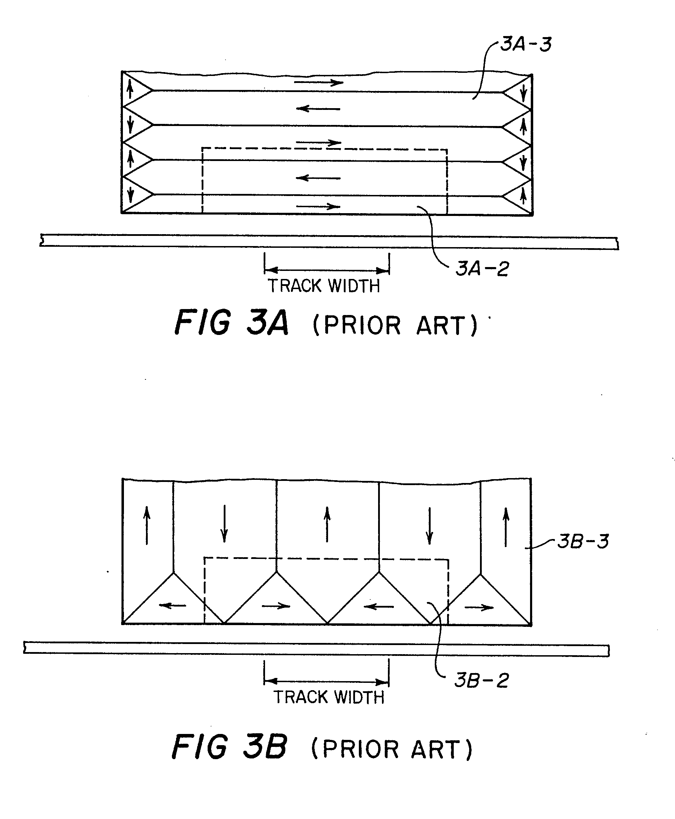

In order to take advantage of magnetoresistive head's ability to read high density data, the head needs insulation from magnetic fields emitted by surrounding devices. Shields located on either side of the head, as shown in Figure 1A and 1B accomplish this. However, these shields have four major problems. First, the shields may obtain an undesirable magnetic domain structure that exposes the magnetoresistive transducer to several magnetic domains as shown in Figures 3A and 3B. The boundaries of the magnetic domains produce abrupt changes in magnetic fields that distort the transducer's output. Secondly, the shields may amplify and focus the stray magnetic fields emitted by surrounding devices commonly found in disc drives such as motors. The amplified and focused stray magnetic field may affect the magnetoresistive transducer's operation, change the transducer's biasing so that it operates in the non-linear range shown in Figure 5, or erase the information stored on magnetic storage unit. Thirdly, shields with high magnetic reluctance or poor high frequency response may limit the speed at which the magnetoresistive transducer can read data.

Summary of the Invention

The present invention provides an apparatus comprising: a field sensing transducer and a shielding means located adjacent to said field sensing transducer for exposing said transducer to a single stable magnetic domain of said shielding means.

In order to produce a shield with a stable, single magnetic domain in the vicinity of the field sensitive transducer, the shield is cut from anisotropic material with the easy axis of the material lying parallel to the long dimension of the shield. Additionally, the field sensing transducer is placed parallel to the shield's long dimension as shown in Figure 1A. To further ensure the existence of a single magnetic domain in the vicinity of the field sensitive transducer, the height of the shield has a minimum nd maximum range. A shield with a stable, single magnetic domain in the vicinity of the field sensitive element has the advantage of protecting the field sensitive transducer from magnetic domain transitions that produce unpredictable and nonreproducible output.

The shield according to the present invention may provide a planar surface for the field sensitive transducer to rest on. This reduces the transducer's exposure to mechanical stress and eliminates the problems associated with thin film step coverage. Since mechanical stresses affect the transducer's properties, the planar surface has the advantage of stabilizing the transducer.

A high permeability shield is produced by making the shield from high permeability material and by choosing the shield's height so that it is several times the length of the flux decay in the magnetoresistive read head. If the shield has low permeability, then the flux from an approaching transition in the media is not effectively shielded from the transducer, i.e. the ability to resolve closely spaced transitions is degraded. However, if the shield has substantial reluctance or is too small, the magnetic flux is sensed when the transition is far from the sensor. A shield with a low reluctance has the advantage of shielding the flux from an approaching transition until the transition is directly under the field sensitive transducer.

The shield's insensitivity to externally applied fields provides stabilization against external fields by remaining unaffected by external fields. The shield achieves stability in the presence of external fields by maximizing the shape and material anisotropy. Large shape anisotropy is achieved by forming a shield with a small thickness to height ratio. Low material anisotropy is achieved by using a material with a small anisotropic field. A stable shield has the advantage of attenuating external magnetic fields that would otherwise cause the field sensitive transducer and magnetic media to produce erroneous data.

Thus, the shield of the present invention that provides a planar surface for the field sensitive transducer; exposes the field sensitive transducer to a single, stable magnetic domain; has high permeability; and is stable against external magnetic fields has numerous advantages. The advantages result in the field sensitive transducer having a greater signal to noise ratio. The improved signal to noise ratio enables the transducer to store a higher density of data on the magnetic media. The higher density lowers data storage cost.

Brief Description of the Drawings

Figure 1A shows a side view and 1B an end view of the shield of the present invention with the field sensitive transducer.

Figure 2 shows an enlarged view of part of Figure 1B.

Figures 3A and 3B show magnetic domains in prior-art shields.

Figures 4A and 4B show magnetic domain configurations for shields according to the present invention.

Figure 5 shows the operation range of magnetoresistive heads.

Detailed Description of the Preferred Embodiment

The elements in the drawings have a two part number. The first part of the number identifies the drawing and the second part of the number identifies the element on the drawing.

Figure 1A shows the field sensitive transducer 1A-2 attached to the shield 1A-3. The wires 1A-7 conduct power to and the output signal from the transducer 1A-2. The wire 1A-7 defines the active region of the transducer 1A-2. This active region is equal to a track width of the storage media 1A-5. The transducer 1A-2 is located on the air bearing surface adjacent to the storage medium 1A-5. Figure 1B shows an end view of the shield - transducer combination. The transducer 1B-2 is sandwiched between the two plate-like shields 1B-3. The spaces between the transducer 1B-2 and shields 1B-3 re filled with insulator material 1B-9. The transducer 1B-2 used in the preferred embodiment of the invention is a field sensitive transducer 1B-2 such as a magnetoresistive transducer, a Hall transducer, and or a magnetic field. effect transistor.

The shield 1B-3 provides a planar surface for the transducer 1B-5 to rest upon. One entire side of the transducer 1B-5 must rest on the layer of the insulation 1B-9 of shield 1B-3.

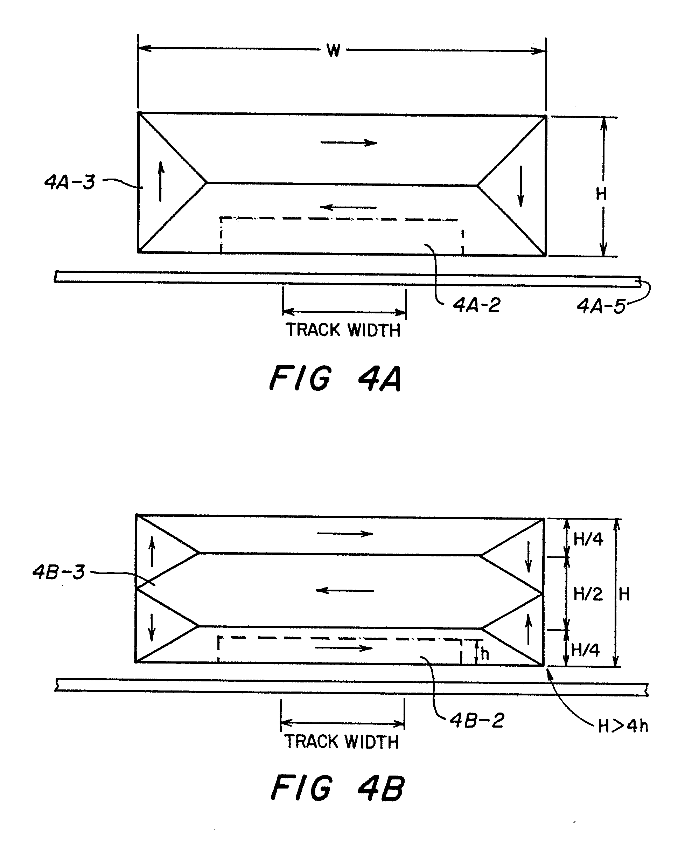

Prior-art shields 3A-3 and 3B-3 have the magnetic domain configuration shown in Figure 3A and 3B. The transducer 3A-2, 3B-2 is exposed to several magnetic domains which causes the transducer 3A-2, 3B-2 to have unpredictable and nonreproducible output. Shield 4A-3 and 4B-3 of the present invention exposes the transducer 4A-2, 4B-2 to one magnetic domain. If the shield 4A-3 is made from material exhibiting uniaxial anisotropy, due to magnetocrystalline, and/or magnetostriction effects, the material must be cut so that its long axis is parallel to the magnetic easy axis of the material. The magnetic easy axis is the axis along which the magnetic field prefers to lie. Also, this easy axis must be parallel to the track width of the storage medium 4A-5 and parallel to the long axis of the transducer 4A-2 as shown in Figure 4A. The height H of the shield 4A-3 must be more than 4 times height h of the transducer 4A-2.

In order to produce a shield with low magnetic reluctance, the height H of the shields 4B-3 must be significantly greater than the characteristic length of flux decay in the transducer 4B-2. If the height of the shield 4B-3 is greater than 10 times the characteristic length of flux decay in the transducer 4B-2, then the shield 4B-3 is essentially infinite in size, has low magnetic reluctance and hence does not limit the readback efficiency of the sensor element 4B-2. The length of flux decay in the transducer 4B-2 is

$$1 = \sqrt{\frac{\mu g t}{2}}$$

where $\mu$ is permeability of the sensor; g is the gap length shown in Figure 2, and where t is the thickness of the transducer. In the preferred embodiment of the invention, for example, $\mu = 1000$; $g = 1\mu m$; and $t = 0.05\mu m$ and flux decay length equals 5 $\mu m$. Thus, the height of the shield 4B-3 should be significantly greater, for example, 100 $\mu m$.

The shield 4B-3, according to the present invention, resists being magnetized by external fields. If a field 20 times greater than the earth's field, such as H = 10 "Oersteds, is applied in a direction normal to the plane of the recording media the shield's 4B-3 resulting magnetization level must be less than 10% of the shield's saturation magnetization level. Using a Stoner-Wolfarth equation, the shield's 4B-3 magnetization level is

$$\frac{M_y}{M_s} = \sin\theta = \frac{H_A}{H_K + \frac{4\pi M_s T}{T + H}}$$

where $H_A$ is the external magnetic field, $H_K$ is the anisotropic field of the shield material, and

$$\frac{4\pi M_s T}{T + H}$$

is the anisotropic field due to the shape of shield 4B-3 where $M_s$ = the saturation magnetization of the shield material, T is the thickness of the shield as shown in Figure 2, and H is the height of the shield as shown in Figure 4B.

In a shield according to the present invention, the shield material is $Ni_{81}Fe_{19}$ where the anisotropic field of shield material is $H_K = 5$ Oe, and $4\pi M_s = 10^4$G. For the magnetization at the center of the shield 4B-3 to be less than 10% of the shield's saturation magnetization, the value of the Stoner-Wolfarth equation should be less than .1. For this to occur, the lower limit of the ration T/H is approximately .01. For a shield thickness of $2\mu m$, the shield height must be less than 200 $\mu m$.

The shield's ability to resist magnetization can be further augmented by making the shields 4B-3 from materials that provide higher $H_K$ and $4\pi M_s$ values. For $Co_x M_y N_z$ material systems (where M = Zr, Hf, Ti, Y; N = Nb, Mo, W; X = 85 to 92% and y + z = 8 to 15%), $H_K = 30$ to 50 Oe and $4\pi M_s = 10KG$ to 15KG can be obtained. The concentrations of M and N elements are selected to obtain zero magnetostrictive material, that is, material insensitive to external stress. By using $H_K = 30$ Oe and $4\pi M_s = 15KG$ in the Stoner-Wolfarth equation, we obtain .004 for the T/H minimum value. THis implies that for T = $2\mu m$, H must be less than $400\mu m$ rather than $200\mu m$ for the nickel/iron shield. Also, for shields of a given height thinner shields can be used. Thinner shields are advantageous from device performance and fabrication standpoints.

## Claims

1. An apparatus comprising: a field sensing transducer (1A-2) and a shielding means (1A-3) located adjacent to said field sensing transducer (1A-2) for exposing said transducer (1A-2) to a single stable magnetic domain of said shielding means (1A-3).

2. An apparatus as in claim 1 wherein said shielding means (1A-3) as a plate.

3. An apparatus as in claim 2 wherein the magnetic easy axis of said plane is parallel to the long dimension of said plate.

4. An apparatus as in claim 3 wherein the long dimension of said field sensing transducer (1A-2) is parallel to said long dimension of said plate.

5. An apparatus as in claim 4 wherein the height (H) of said plate is more than four times the height (h) of said field sensing transducer (1A-2).

6. An apparatus as in claim 1 wherein said shielding means (1A-3) further comprises high permeability shield for said field sensing transducer (1A-2).

7. An apparatus as in claim 6 wherein the height of said plate (1A-3) is greater than the characteristic length of flux decay in said field sensing transducer (1A-2).

8. An apparatus as in claim 1 wherein said shielding means (1A-3) further comprises a means for resisting magnetisation by external fields.

9. An apparatus as in claim 8 wherein the means to resist magnetization by external fields further comprises increasing the anisotropic field due to the shape and to the material of the shield (1A-3).

10. An apparatus as in claim 9 wherein the said first and second plates (1A-3) are made out of $Co_x M_y N_z$ material system, wherein M = Zr, Hf, Ti, Y; N = Nb, Mo, W; X = 85 to 92% and Y + Z = 8 to 15%.

0262925

FIG 1A

0262925

FIG 1B

FIG 2

0262925

FIG 3A (PRIOR ART)

FIG 3B (PRIOR ART)

0262925

FIG 4A

FIG 4B

FIG 5